# EUROPEAN PATENT SPECIFICATION

(11) **EP 2 724 802 B1**
(45) Date of publication and mention of the grant of the patent: **12.02.2020**
(21) Application number: 13188540.2
(22) Date of filing: 14.10.2013
(51) Int. Cl.: B23B 47/28, F01D 17/16, F01D 25/28

(54) **Cutting tool locating device for forming an opening in a gear**
Schneidwerkzeug-Lokalisierungsvorrichtung zur Bildung einer Öffnung in einem Zahnrad
Dispositif de positionnement d'outil de coupe pour former une ouverture dans une roue dentée

(30) Priority: 23.10.2012 US 201213658315
(43) Date of publication of application: 30.04.2014
(73) Proprietor: General Electric Company, Schenectady, NY 12345 (US)
(72) Inventor: Spanos, Charles Vaughan, Greenville, SC 29615 (US); Corn, Randall Stephen, Greenville, SC 29615 (US); Herbold, John William, Greenville, SC 29615 (US); Holmes, James Bradford, Greenville, SC 29615 (US)
(74) Representative: Freigutpartners IP Law Firm

(56) References cited:
- EP-A2- 1 207 272
- GB-A- 869 924
- GB-A- 2 408 471
- US-A- 820 965
- US-B1- 6 305 886

## Description

The subject matter disclosed herein relates to the art of turbomachines and, more particularly, to a cutting tool locating device for a turbomachine inlet guide vane assembly.

Many turbomachines include a compressor portion linked to a turbine portion through a common compressor/turbine shaft or rotor and a combustor assembly. The compressor portion guides compressed air flow through a number of sequential stages toward the combustor assembly. In the combustor assembly, the compressed air flow mixes with a fuel to form a combustible mixture. The combustible mixture is combusted in the combustor assembly to form hot gases. The hot gases are guided to the turbine portion through a transition piece. The hot gases expand through the turbine portion rotating turbine blades to create work that is output, for example, to power a generator, a pump, or to provide power to a vehicle. In addition to providing compressed air for combustion, a portion of the compressed airflow is passed through the turbine portion for cooling purposes. Generally the compressor portion includes a compressor casing and the turbine portion includes a turbine casing.

In many cases, air enters the compressor portion through an inlet provided with selectively adjustable inlet guide vanes. Generally, the inlet guide vanes include an airfoil portion coupled to a shaft. An angle of attack of the airfoil portion is adjusted by applying a force to the shaft. Each shaft is typically provided with a shaft gear that interacts with a ring gear. Rotation of the ring gear is transmitted to the shaft gear to selectively and collectively position the inlet guide vanes to establish the desired angle of attack for the inlet air entering the compressor.

GB 869 924 A discloses a cutting tool locating device comprising a disc having slots in which slide guide-blocks having drill-guides are provided. The blocks are placed in the required slots and set at the desired pitch-circle by inserting plugs in the holes and using a micrometer over the plugs. The blocks are then clamped by plates and screws. To obtain the maximum range of adjustment of the blocks, they are reversible in the slots. The cutting tool locating device can be set by using a plug in a hole of the cutting tool locating device and in the hole in the work, e.g. a shaft.

GB 2 408 471 A discloses a method of locating a cutting tool for forming an opening in a gear.

According to the herein claimed invention, there is provided a cutting tool locating device for forming an opening in a gear according to claim 1.

According to the herein claimed invention, there is also provided an inlet guide vane (IGV) assembly for a turbomachine according to claim 9 including an airfoil portion, a shaft member extending from the airfoil portion, a gear mounted to the shaft member, and a cutting tool locating device according to any of the claims 1 to 8.

According to the herein claimed invention, there is also provided a method of locating a cutting tool for forming an opening in a gear according to claim 12.

These and other advantages and features will become more apparent from the following description taken in conjunction with the drawings.

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a partial cross-sectional side view of a turbomachine including an inlet guide vane (IGV) assembly in accordance with the prior art;
FIG. 2 is a partial perspective view of the IGV assembly of FIG. 1, illustrating a cutting tool locating device in accordance with an exemplary embodiment;
FIG. 3 is an exploded view of the cutting tool locating device of FIG. 2;
FIG. 4 is a plan view of an IGV gear mounted to an IGV shaft;
FIG. 5 is a plan view of the IGV gear of FIG. 4 rotated about the IGV shaft;
FIG. 6 is a plan view of a base member of the cutting tool locating device in accordance with an exemplary embodiment mounted to the IGV gear of FIG. 5;
FIG. 7 is a plan view of a guide member positioned upon the base member of FIG. 6;
FIG. 8 is a plan view of a coupler member joining the guide member to the base member;
FIG. 9 is a plan view of an alignment puck being secured to the guide member;
FIG. 10 is a plan view of the IGV gear of FIG. 5 having a new opening in accordance with an exemplary embodiment; and
FIG. 11 illustrates a cutting tool actuation device for urging a cutting tool to form an opening in the IGV gear of FIG. 5 in accordance with an aspect of an exemplary embodiment.

The detailed description explains embodiments of the invention, together with advantages and features, by way of example with reference to the drawings.

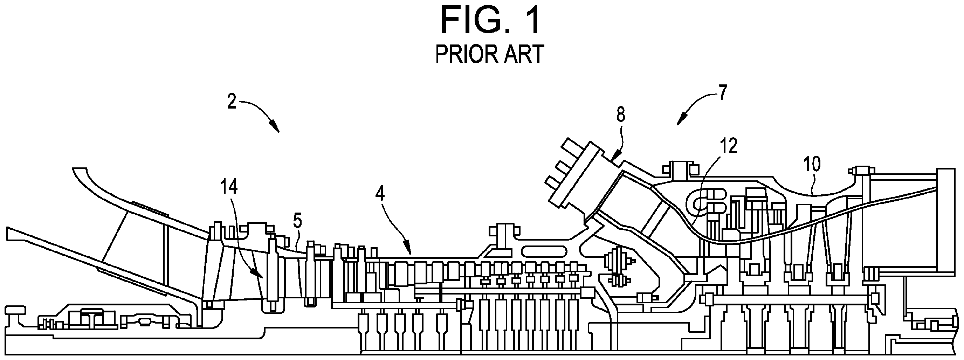

With reference to FIG. 1, a turbomachine constructed in accordance with exemplary embodiments of the invention is generally indicated at 2. Turbomachine 2 includes a compressor portion 4 having a compressor casing 5. Compressor portion 4 is fluidically connected to a combustor assembly 7 having a plurality of combustors, one of which is indicated at 8, arranged in a can-annular array. Of course, it should be understood that other combustor arrangements may also be employed. Combustor assembly 7 is also fluidically connected to a turbine portion 10 through a transition piece 12.

During operation, air flows across inlet guide vanes (IGV), one of which is shown at 14, into compressor portion 4. The air is compressed and passed to combustor 8. At the same time, fuel is passed to combustor 8 to mix with the compressed air to form a combustible mixture. Additional air is employed for cooling in combustor assembly 7 and turbine portion 10. The combustible mixture is combusted to form hot gases that are guided through transition piece 12 into turbine portion 10. Turbine portion 10 converts thermal energy from the combustion gases into mechanical rotational energy that is employed to power a device (not shown).

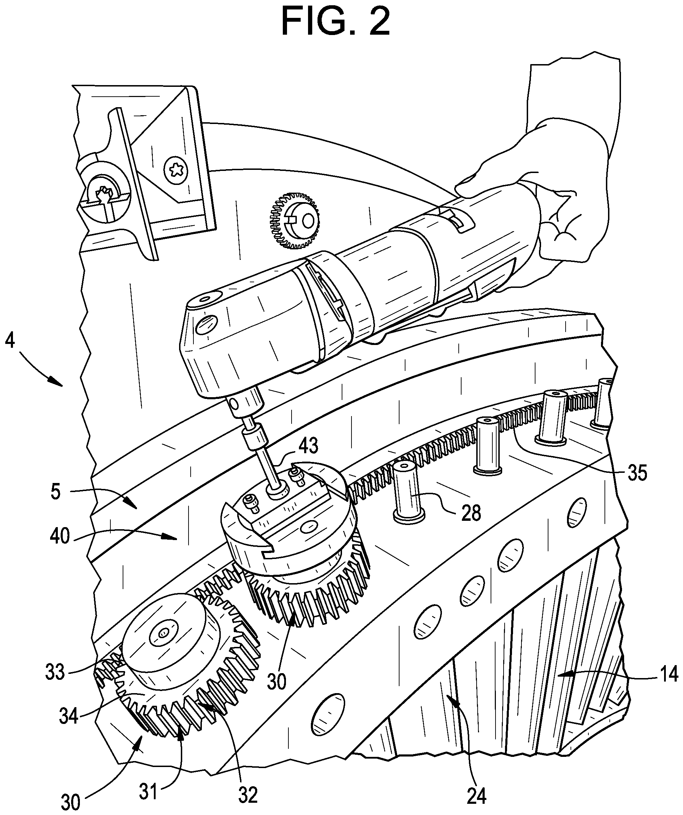

As shown in FIG. 2, each IGV 14 includes an airfoil portion 24 supported by a shaft member 28. Airfoil portion 24 is exposed to inlet air flow while shaft member 28 extends through compressor casing 5. A gear 30 is coupled to shaft member 28. Gear 30 includes a base portion 31 provided with a plurality of gear teeth 32. Base portion 31 extends to a raised, reduced diameter, portion 33 through a step section 34. Each gear 30 is operatively coupled to a ring gear 35. Rotation of ring gear 35 imparts a rotational force to IGVs 14. Over time, gear teeth 32 wear. Worn gear teeth generally lead to a need for repair or replacement of gear 30. Gear 30 completes only a partial rotation when acted upon by ring gear 35. Therefore, indexing or rotating and reestablishing a connection between gear 30 and shaft member 28 will provide a renewed interface with ring gear 35. When indexing gear 30 it is desirable to form a new keyway in reduced diameter portion 33 to facilitate a new connection with shaft member 28. As will be detailed more fully below, a cutting tool locating device 40 is connected to gear 30 to guide a cutting tool 43 into reduced diameter portion 33.

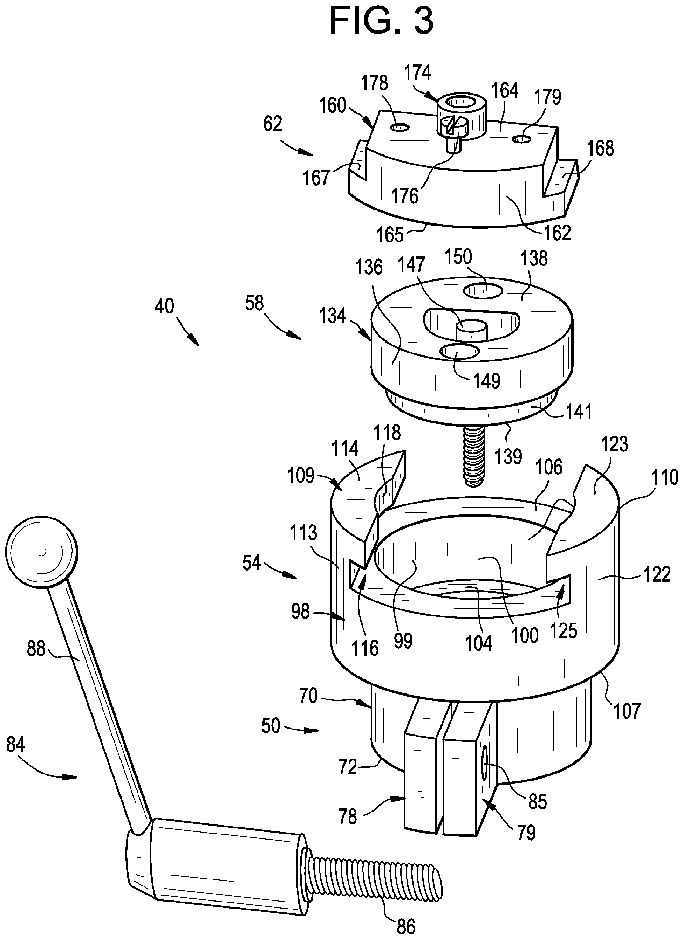

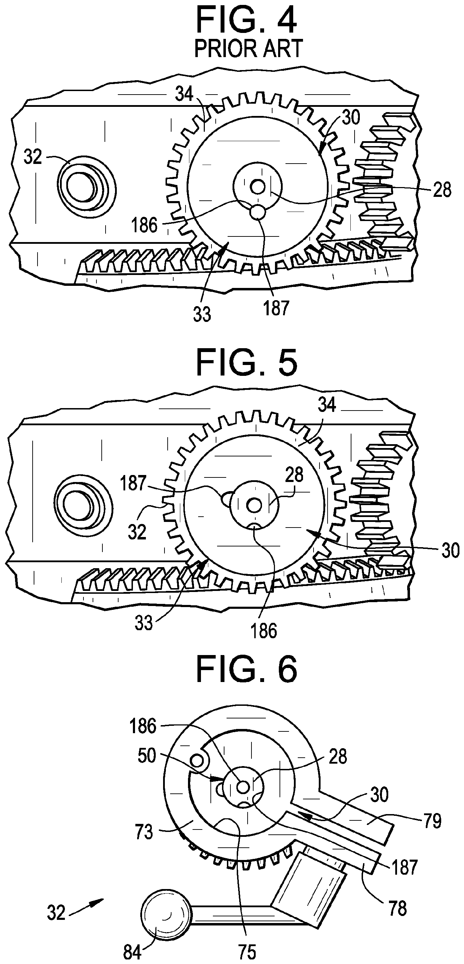

In accordance with an aspect of the exemplary embodiment illustrated in FIG. 3, cutting tool locating device 40 includes a base member 50, a guide member 54, a coupler member 58 and an alignment puck 62. Base member 50 includes a base body 70 having a lower surface 72, an upper surface 73 (FIG. 6) and a central opening 75 (FIG. 6). Lower surface 72 is configured to rest upon step section 34 with central opening 75 receiving reduced diameter portion 33. Base member 50 also includes a first clamping ear 78 and a second clamping ear 79. First and second clamping ears 78 and 79 are urged toward one another to secure base member 50 to reduced diameter portion 33. A mechanical fastener 84 is passed through an opening (not shown) in, for example, first clamping ear 78 and engages with threads (not shown) provided in an opening 85 provided in second clamping ear 79. Mechanical fastener 84 is shown to include a threaded portion 86 that engages with the threads and an operating handle 88.

Base member 50 supports guide member 54. In the exemplary embodiment shown, guide member 54 is secured to base member 50 by coupler member 58 as will be discussed more fully below. Guide member 54 includes a guide member body 98 having an inner surface 99 that defines a central opening 100. An annular step 104 extends around inner surface 99 within central opening 100. Guide member body 98 includes an upper surface 106 and a lower surface 107. Lower surface 107 rests upon upper surface 73 of base member 50.

Guide member 54 is also shown to include a first flange 109 and an opposing second flange 110. First flange 109 includes a first portion 113 that extends generally perpendicularly from upper surface 106 and a second portion 114. Second portion 114 extends generally perpendicularly from first portion 113 and is spaced from upper surface 106 so as to define a first guide track 116. Second portion 114 is also shown to include a recess 118 having a generally circular shape. Similarly, second flange 110 includes a first portion 122 that extends generally perpendicularly from upper surface 106 and a second portion 123. Second portion 123 extends generally perpendicularly from first portion 122 and is spaced from upper surface 106 so as to define a second guide track 125. Second portion 123 is also shown to include a recess 127 having a generally circular shape.

Coupler member 58 includes a coupler member body 134 that is sized to be received by central opening 100. Coupler member body 134 includes an outer annular edge 136, an upper surface 138 and a lower surface 139 defined by an annular step portion 141. Annular step portion 141 is formed in outer annular edge 136. Coupler member body 134 includes a central opening (not separately labeled) that receives a mechanical fastener 147. Mechanical fastener 147 is configured to engage with a central opening (also not separately labeled) formed in shaft 28. When tightened, mechanical fastener 147 urges coupler member 58 against annular step 104 to clamp guide member 54 against upper surface 73 of base member 50. Coupler member body 134 also includes first and second offset openings 149 and 150 spaced from the central opening. First and second offset openings are arranged to selectively align with shaft 28 as will be discussed more fully below.

Alignment puck 62 includes an alignment puck body 160 having a curvilinear edge 162, an upper surface 164 and a lower surface 165. Alignment puck body 160 also includes a first tab 167 and an opposing second tab 168. First and second tabs 167 and 168 are configured to be received by first and second guide tracks 116 and 125. Alignment puck 62 includes a central opening (not separately labeled) that receives a bushing 174. A fastener 176 is threaded into another opening (not shown) formed in alignment puck body 160 to retain bushing 174. Additional threaded openings 178 and 179 are positioned on either side of bushing 174. Although described as having a curvilinear edge, alignment puck 62 may include various other geometries. Further, it should be understood that instead of employing mechanical fastener 147 to claim guide member 54 to base member 50, a clamping force may be generated through fasteners extending through and operatively engaging with threaded openings 178 and 179.

As seen in FIG. 4, shaft 28 includes a first keyway portion 186 and gear 30 includes a second keyway portion 187. First and second keyway portions 186 and 187 are aligned and provided with, for example, a woodruff key to transmit movement of gear 30 to shaft 28. Over time, teeth 32 on gear 30 wear. In order to ensure proper rotation of shaft 28 gear 30 is rotated to expose fresh teeth (not shown) to ring gear 35 as shown in FIG. 5. When gear 30 is rotated, first and second keyway portions 186 and 187 are no longer in alignment. Accordingly, a new keyway portion is formed in gear 30. The new keyway portion is formed by forming an opening in gear 30 that aligns with first keyway portion 186. As will be discussed more fully below, cutting tool locating device 40 is employed to form the new keyway portion.

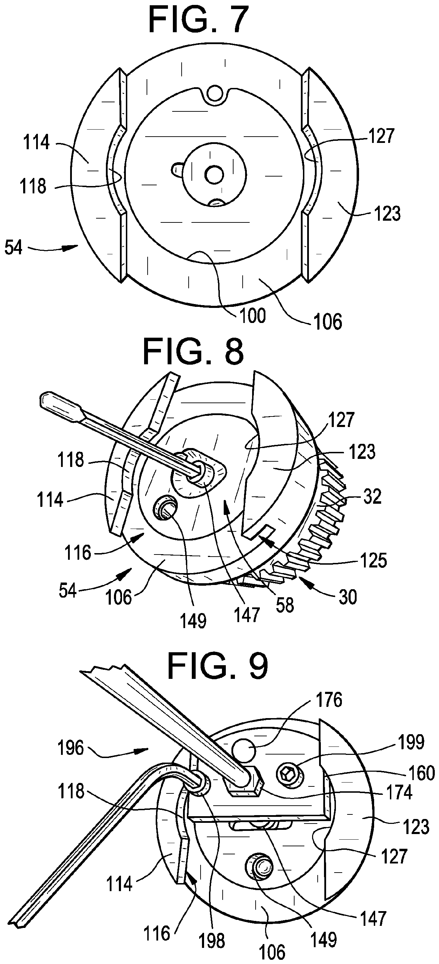

As shown in FIG. 6, base member 50 is mounted to gear 30. More specifically, central opening 75 is positioned about raised, reduced diameter portion 33 with lower surface 72 resting upon step section 34. Mechanical fastener 84 is operated to bring together first and second clamping ears 78 and 79 to affix base member 50 to gear 30. At this point, guide member 54 is positioned upon upper surface 73 and coupler member 58 is positioned within central opening 100 as shown in FIG. 7. Mechanical fastener 147 is threaded into the opening formed in shaft 28 to clamp guide member 54 to base member 50 as shown in FIG. 8. Of course, it should be understood, that guide member 54 may also be clamped directly to gear 34.. First and second tabs 167 and 168 are aligned with first and second flanges 109 and 110 and alignment puck 62 is shifted across central opening 100 as shown in FIG. 9.

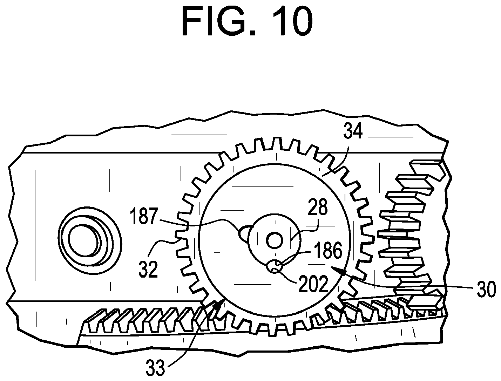

An alignment tool 196 is inserted into bushing 174 and guided into first keyway portion 186. Alignment tool 196 positions keyway portion 186 centrally relative to bushing 174. Alignment puck 62 may be shifted along first and second flanges 109 and 110 to facilitate insertion of alignment tool 196. Additional alignment may be provided by rotating guide member 54. Once alignment tool 196 is inserted into first keyway portion 186, mechanical fasteners 198 and 199 are threaded into threaded openings 178 and 179 and driven into contact with coupler member 58 to lock alignment puck 62 into position. At this point, cutting tool 43, such as a drill bit or the like shown in FIG. 2, may be inserted into bushing 174 and guided into gear 30 to form a new keyway portion 202 as shown in FIG. 10. New keyway portion 202 includes a centerline (not separately labeled) that is substantially aligned with a centerline (also not separately labeled) of first keyway 186.

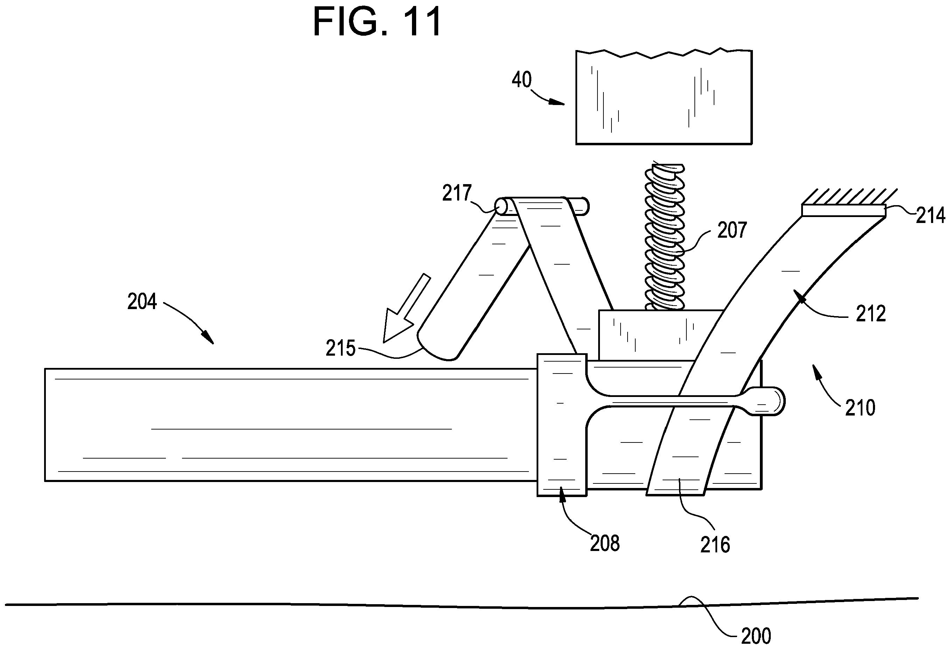

Occasionally, a need arises to form a new keyway portion in a gear that is positioned in an awkward location. As shown in FIG. 11, cutting tool locating device 40 may be positioned at an underside of compressor portion 4 adjacent to a base or support structure 200 leaving little room to manipulate a tool such as shown at 204. Tool 204 supports and rotates a cutting tool 207 such as a drill bit or the like. Cutting tool 207 includes a guide element 208 that provides leverage to guide cutting tool 207 into, for example, gear 30. Guide element 208 includes a leveraging element 210 that takes the form of a strap 212. Strap 212 includes a first end 214 that extends to a second end 215 through an intermediate portion 216. First end 214 is affixed to, for example, compressor casing 5 and intermediate portion 216 is passed over a roller 217. Roller 217 is also affixed to, for example, compressor casing 5. A force is applied to second end 215 causing strap 212 to urge tool 204 toward compressor portion 4 guiding cutting tool 207 into gear 30 to form another keyway portion. In this manner, an operator may employ tool 204 in tighter spaces then would otherwise be possible, or comfortable.

At this point it should be understood that while the exemplary embodiments describe a tool that facilitates alignment of a cutting tool to form a keyway portion in an inlet guide vane gear, the alignment tool may be used to form an opening in a gear associated with any number of a variety of applications.

While the invention has been described in detail in connection with only a limited number of embodiments, it should be readily understood that the invention is not limited to such disclosed embodiments. Additionally, while various embodiments of the invention have been described, it is to be understood that aspects of the invention may include only some of the described embodiments. Accordingly, the invention is not to be seen as limited by the foregoing description, but is only limited by the scope of the appended claims.

## Claims

1. A cutting tool locating device (40) for forming an opening in a gear (30) comprising:
a guide member (54) configured and disposed to be fixedly connected to a gear (30) coupled to a shaft; and
an alignment puck (62) moveably mounted to the guide member (54), the alignment puck (62) including a bushing (174) configured and disposed to align with a recess formed in the shaft,
a coupler member (58) having a mounting feature configured and disposed to secure the coupler member (58) to the shaft, **characterized in that** the guide member (54) includes a central opening having an annular step (104), the coupler member (58) nesting within the central opening and resting upon the annular step (104).

2. The cutting tool locating device according to claim 1, further comprising:
a base member (50) configured and disposed to fixedly connect to the gear (30), the base member (50) including a surface for supporting the guide member (54).

3. The cutting tool locating device according to claim 1, wherein guide member (54) can be fixedly connected to the gear (30) through the coupler member (58).

4. The cutting tool locating device according to claim 2, wherein the base member (50) includes first and second clamping ears (78, 79) configured and disposed to fixedly connect the base member (50) to the gear (30).

5. The cutting tool locating device according to any preceding claim, wherein the guide member (54) includes a first flange (109) defining a first guide track (116) and a second flange (110) defining a second guide track (125), the alignment puck (62) being moveably mounted to the first and second guide tracks (116, 125).

6. The cutting tool locating device according to claim 5, wherein the alignment puck (62) includes a mechanical fastener (84), the bushing (174) being secured to the alignment puck (62) through the mechanical fastener (84).

7. The cutting tool locating device according to any preceding claim, wherein the alignment puck (62) includes a mechanical fastener (84) configured and disposed to lock the alignment puck (62) relative to the guide member (54).

8. The cutting tool locating device according to any preceding claim, further comprising:
a cutting tool (207) configured and disposed to pass through the bushing (174) to form an opening in the gear (30).

9. An inlet guide vane (IGV) assembly for a turbomachine comprising:
an airfoil portion (24);
a shaft member (28) extending from the airfoil portion (24);
a gear (30) mounted to the shaft member (28); and
a cutting tool locating device (40) according to any preceding claim.

10. The IGV assembly according to claim 11, comprising at least one of:
a base member (50) supported by the gear (30) over the shaft member (28), the base member (50) including a surface for supporting the guide member (54), and
a coupler member (58) fixedly mounted to the shaft member (54), the coupler member (58) joining the guide member (54) to the base member (50).

11. The IGV assembly according to claim 9 or claim 10, wherein:
the alignment puck (62) includes a mechanical fastener (84), the bushing (174) being detachably mounted to the alignment puck (62) through the mechanical fastener (84), and/or
the alignment puck (62) includes a mechanical fastener (84) configured and disposed to lock the alignment puck (62) relative to the guide member (54).

12. A method of locating a cutting tool for forming an opening in a gear, the method being **characterized by**:
positioning a guide member (54) over a gear (30) coupled to a shaft;
mounting an alignment puck (62) to the guide member (54);
aligning a bushing (174) provided on the alignment puck (62) relative with an opening formed in the shaft;
locking the alignment puck (62) and guide member (54) relative to the gear (30);
inserting a cutting tool element (207) through the bushing (174); and forming an opening in the gear (30) that aligns with the opening in the shaft, wherein locking the guide member includes:
positioning a coupler member (58) in a recess formed in the guide member (54);
abutting the coupler member (58) with a step section extending about the recess; and
connecting the coupler member (58) to the shaft.

## Patentansprüche

1. Schneidwerkzeug-Lokalisierungsvorrichtung (40) zur Bildung einer Öffnung in einem Zahnrad (30), umfassend:
ein Führungselement (54), das dazu ausgestaltet und angeordnet ist, fest mit einem Zahnrad (30) verbunden zu sein, das an eine Welle gekoppelt ist; und
eine Ausrichtungsscheibe (62), die beweglich an dem Führungselement (54) angebracht ist, wobei die Ausrichtungsscheibe (62) eine Buchse (174) einschließt, die dazu ausgestaltet und angeordnet ist, an einer in der Welle ausgebildeten Aussparung ausgerichtet zu sein;
ein Kupplungselement (58) mit einem Montageteil, das dazu ausgestaltet und angeordnet ist, das Kupplungselement (58) an der Welle zu befestigen,
**dadurch gekennzeichnet, dass** das Führungselement (54) eine zentrale Öffnung mit einer ringförmigen Stufe (104) aufweist, wobei das Kupplungselement (58) innerhalb der zentralen Öffnung verschachtelt ist und auf der ringförmigen Stufe (104) aufliegt.

2. Schneidwerkzeug-Lokalisierungsvorrichtung nach Anspruch 1, ferner umfassend:
ein Basiselement (50), das dazu ausgestaltet und angeordnet ist, eine feste Verbindung mit dem Zahnrad (30) herzustellen, wobei das Basiselement (50) eine Oberfläche zum Tragen des Führungselements (54) einschließt.

3. Schneidwerkzeug-Lokalisierungsvorrichtung nach Anspruch 1, wobei das Führungselement (54) durch das Kupplungselement (58) fest mit dem Zahnrad (30) verbunden sein kann.

4. Schneidwerkzeug-Lokalisierungsvorrichtung nach Anspruch 2, wobei das Basiselement (50) eine erste und eine zweite Klemmöse (78, 79) einschließt, die dazu ausgestaltet und angeordnet sind, das Basiselement (50) fest mit dem Zahnrad (30) zu verbinden.

5. Schneidwerkzeug-Lokalisierungsvorrichtung nach einem der vorstehenden Ansprüche, wobei das Führungselement (54) einen ersten Flansch (109), der eine erste Führungsschiene (116) definiert, und einen zweiten Flansch (110) umfasst, der eine zweite Führungsschiene (125) definiert, wobei die Ausrichtungsscheibe (62) beweglich an der ersten und der zweiten Führungsschiene (116, 125) angebracht ist.

6. Schneidwerkzeug-Lokalisierungsvorrichtung nach Anspruch 5, wobei die Ausrichtungsscheibe (62) ein mechanisches Befestigungselement (84) umfasst, wobei die Buchse (174) durch das mechanische Befestigungselement (84) an der Ausrichtungsscheibe (62) befestigt ist.

7. Schneidwerkzeug-Lokalisierungsvorrichtung nach einem der vorstehenden Ansprüche, wobei die Ausrichtungsscheibe (62) ein mechanisches Befestigungselement (84) umfasst, das dazu ausgestaltet und angeordnet ist, die Ausrichtungsscheibe (62) relativ zum Führungselement (54) zu verriegeln.

8. Schneidwerkzeug-Lokalisierungsvorrichtung nach einem der vorstehenden Ansprüche, ferner umfassend:
ein Schneidwerkzeug (207), das dazu ausgestaltet und angeordnet ist, durch die Buchse (174) zu verlaufen, um eine Öffnung in dem Zahnrad (30) zu bilden.

9. Einlassleitschaufel-Baugruppe (IGV-Baugruppe) für eine Turbomaschine, umfassend:
einen Schaufelblattabschnitt (24);
ein Wellenelement (28), das von dem Schaufelblattabschnitt (24) aus verläuft;
ein Zahnrad (30), das an dem Wellenelement (28) angebracht ist; und
eine Schneidwerkzeug-Lokalisierungsvorrichtung (40) nach einem der vorstehenden Ansprüche.

10. IGV-Baugruppe nach Anspruch 11, umfassend mindestens eines der Folgenden:
ein Basiselement (50), das von dem Zahnrad (30) über dem Wellenelement (28) getragen wird, wobei das Basiselement (50) eine Oberfläche zum Tragen des Führungselements (54) einschließt, und
ein Kupplungselement (58), das fest an dem Wellenelement (28) angebracht ist, wobei das Kupplungselement (58) das Führungselement (54) mit dem Basiselement (50) verbindet.

11. IGV-Baugruppe nach Anspruch 9 oder Anspruch 10, wobei:
die Ausrichtungsscheibe (62) ein mechanisches Befestigungselement (84) einschließt, wobei die Buchse (174) durch das mechanische Befestigungselement (84) lösbar an der Ausrichtungsscheibe (62) angebracht ist und/oder die Ausrichtungsscheibe (62) ein mechanisches Befestigungselement (84) zum Verriegeln der Ausrichtungsscheibe (62) relativ zum Führungselement (54) aufweist.

12. Verfahren zum Lokalisieren eines Schneidwerkzeugs zur Bildung einer Öffnung in einem Zahnrad, **gekennzeichnet durch**: Positionieren eines Führungselements (54) über einem Zahnrad (30), das an eine Welle gekoppelt ist;
Anbringen einer Ausrichtungsscheibe (62) an dem Führungselement (54);
Ausrichten einer Buchse (174), die an der Ausrichtungsscheibe (62) vorgesehen ist, relativ zu einer Öffnung, die in der Welle gebildet ist;
Verriegeln der Ausrichtungsscheibe (62) und des Führungselements (54) relativ zu dem Zahnrad (30);
Einführen eines Schneidwerkzeugelements (207) durch die Buchse (174); und
Bilden einer Öffnung in dem Zahnrad (30), das an der Öffnung in der Welle ausgerichtet ist, wobei das Verriegeln des Führungselements Folgendes einschließt:
Positionieren eines Kupplungselements (58) in einer Aussparung, die in dem Führungselement (54) gebildet ist;
Anlegen des Kupplungselements (58) an einen Stufenabschnitt, der um die Aussparung herum verläuft; und
Verbinden des Kupplungselements (58) mit der Welle.

## Revendications

1. Dispositif (40) de positionnement d'outil de coupe pour la formation d'une ouverture dans une roue dentée (30) comprenant :
un élément (54) de guidage configuré et disposé pour être raccordé de manière fixe à une roue dentée (30) couplé à un arbre ; et
une plaque (62) d'alignement montée de manière mobile sur l'élément (54) de guidage, la plaque (62) d'alignement comprenant une douille (174) configurée et disposée pour s'aligner avec un évidement formé dans l'arbre,
un élément coupleur (58) ayant une caractéristique de montage configurée et disposée pour fixer l'élément coupleur (58) à l'arbre,
**caractérisé en ce que** l'élément (54) de guidage inclut une ouverture centrale ayant un étage annulaire (104), l'élément coupleur (58) étant niché dans l'ouverture centrale et reposant sur l'étage annulaire (104).

2. Dispositif de positionnement d'outil de coupe selon la revendication 1, comprenant en outre :
un élément (50) de base configuré et disposé pour être raccordé de manière fixe à la roue dentée (30), l'élément (50) de base incluant une surface pour supporter l'élément (54) de guidage.

3. Dispositif de positionnement d'outil de coupe selon la revendication 1, dans lequel l'élément (54) de guidage peut être raccordé de manière fixe à la roue dentée (30) par le biais de l'élément coupleur (58).

4. Dispositif de positionnement d'outil de coupe selon la revendication 2, dans lequel l'élément (50) de base inclut des première et deuxième oreilles (78, 79) de serrage configurées et disposées pour raccorder de manière fixe l'élément (50) de base à la roue dentée (30).

5. Dispositif de positionnement d'outil de coupe selon l'une quelconque des revendications précédentes, dans lequel l'élément (54) de guidage inclut une première bride (109) définissant une première piste (116) de guidage et une deuxième bride (110) définissant une deuxième piste (125) de guidage, la plaque (62) d'alignement étant montée de manière mobile sur les première et deuxième pistes (116, 125) de guidage.

6. Dispositif de positionnement d'outil de coupe selon la revendication 5, dans lequel la plaque (62) d'alignement inclut une attache mécanique (84), la douille (174) étant fixée à la plaque (62) d'alignement par le biais de l'attache mécanique (84).

7. Dispositif de positionnement d'outil de coupe selon l'une quelconque des revendications précédentes, dans lequel la plaque (62) d'alignement inclut une attache mécanique (84) configurée et disposée pour verrouiller la plaque (62) d'alignement par rapport à l'élément (54) de guidage.

8. Dispositif de positionnement d'outil de coupe selon l'une quelconque des revendications précédentes, comprenant en outre :
un outil (207) de coupe configuré et disposé pour passer à travers la douille 174) pour former une ouverture dans la roue dentée (30).

9. Ensemble d'aubes directrices d'entrée (IGV) pour une turbomachine comprenant :
une portion (24) de profil aérodynamique ;
un élément (28) d'arbre s'étendant depuis la portion (24) de profil aérodynamique ;
une roue dentée (30) montée sur l'élément (28) d'arbre ; et
un dispositif (40) de positionnement d'outil de coupe selon l'une quelconque des revendications précédentes.

10. Ensemble IGV selon la revendication 11, comprenant au moins un de :
un élément (50) de base supporté par la roue dentée (30) sur l'élément (28) d'arbre, l'élément (50) de base incluant une surface pour supporter l'élément (54) de guidage, et
un élément coupleur (58) monté de manière fixe sur l'élément (54) d'arbre, l'élément coupleur (58) reliant l'élément (54) de guidage à l'élément (50) de base.

11. Ensemble IGV selon la revendication 9 ou la revendication 10, dans lequel :
la plaque (62) d'alignement inclut une attache mécanique (84), la douille (174) étant montée de manière amovible sur la plaque (62) d'alignement par le biais de l'attache mécanique (84), et/ou la plaque (62) d'alignement inclut une attache mécanique (84) configurée et disposée pour verrouiller la plaque (62) d'alignement par rapport à l'élément (54) de guidage.

12. Procédé de positionnement d'un outil de coupe pour former une ouverture dans une roue dentée, le procédé étant **caractérisé par** :
le positionnement d'un élément (54) de guidage sur une roue dentée (30) couplée à un arbre ;
le montage d'une plaque (62) d'alignement sur l'élément (54) de guidage ;
l'alignement d'une douille (174) prévue sur la plaque (62) d'alignement par rapport à une ouverture formée dans l'arbre ;
le verrouillage de la plaque (62) d'alignement et de l'élément (54) de guidage par rapport à la roue dentée (30) ;
l'insertion d'un élément (207) d'outil de coupe à travers la douille (174) ; et
la formation d'une ouverture dans la roue dentée (30) qui s'aligne avec l'ouverture dans l'arbre, dans lequel le verrouillage de l'élément de guidage inclut :
le positionnement d'un élément coupleur (58) dans un évidement formé dans l'élément (54) de guidage ;
la mise en buté de l'élément coupleur (58) avec une section d'étage s'étendant autour de l'évidement ; et
le raccordement de l'élément coupleur (58) à l'arbre.
